(19) Europäisches Patentamt
European Patent Office
Office européen des brevets

(11) **EP 2 450 535 A1**

(12) **EUROPÄISCHE PATENTANMELDUNG**

(43) Veröffentlichungstag:
**09.05.2012 Patentblatt 2012/19**

(51) Int Cl.:
*F01K 13/02* *(2006.01)*   *F01K 23/10* *(2006.01)*

(21) Anmeldenummer: **09162736.4**

(22) Anmeldetag: **15.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **27.06.2008 DE 102008030170**
**21.07.2008 CH 11272008**

(71) Anmelder: **Alstom Technology Ltd**
**5400 Baden (CH)**

(72) Erfinder:
• **Olia, Hamid**
**8008 Zürich (CH)**
• **Schlesier, Jan**
**5430 Wettingen (CH)**
• **Schönenberger, Martin**
**8044 Zürich (CH)**

(54) **Verfahren zur Primärregelung einer kombinierten Gas- und Dampfturbinenanlage**

(57) Beschrieben wird ein Verfahren zur Primärregelung einer kombinierten Gas- und Dampfturbinenanlage (7, 8) im Netzbetrieb, die längs einer gemeinsamen Welle oder jeweils getrennter Wellen angeordnet ist, bei dem zur Bevorratung einer stationären Dampfturbinen-Reserveleistung (20) ein Dampfturbinen-Stellventil längs einer Arbeitsdampfzuführleitung zu wenigstens einer Druckstufe (1, 2) der Dampfturbine (8) gedrosselt betrieben wird, das im Falle einer abnehmenden Netzfrequenz und einer hierdurch erforderlichen Netzfrequenzstützung in einen zumindest minder gedrosselten Zustand überführt wird.

Die Erfindung zeichnet sich durch folgende Verfahrensschritte aus:
- Erfassen einer Frequenzabweichung einer von der Drehzahl der zumindest mit der Gasturbine (7) verbundenen Welle (5) abhängigen Ist-Frequenz (14) von einem Frequenzsollwert (15),
- Ermitteln einer Primärregel-Soll-Leistung (22) auf Basis der erfassten Frequenzabweichung,
- Ermitteln einer Leistungsabweichung zwischen der Primärregel- Soll-Leistung (22) und einer von der Gasturbine abgegebenen Leistung, der so genannten Primärregel-Gasturbinen-Ist-Leistung (33) oder einer berechneten Primärregel-Gasturbinen-Ist-Leistung (43)
- Ermitteln einer Primärregel-Dampfturbinensollleistung (19) ausschließlich auf Basis der ermittelten Leistungsabweichung und
- Positionieren des einen Stellventils derart, dass die von der Dampfturbine abgegebene Leistung, die so genannte Dampfturbinen-Ist-Leistung, der Primärregel-Dampfturbinensollleistung (19) entspricht.

Figur 2

EP 2 450 535 A1

## Beschreibung

### Technisches Gebiet

Die Erfindung bezieht sich auf ein Verfahren zur Primärregelung einer kombinierten Gas- und Dampfturbinenanlage im Netzbetrieb, die längs einer gemeinsamen oder jeweils getrennter Wellen angeordnet ist, bei dem zur Bevorratung einer Reserveleistung ein Stellventil längs einer Arbeitsdampfzuführleitung zu wenigstens einer Druckstufe der Dampfturbine gedrosselt betrieben wird, das im Falle einer abnehmenden Netzfrequenz und einer hierdurch erforderlichen Netzfrequenzstützung in einen zumindest minder gedrosselten Zustand überführt wird.

### Stand der Technik

Kombinierte Gas- und Dampfturbinenanlagen sind Anlagen, in denen die im Gasturbinenteil entstehende Abwärme in Form von Abgasen thermisch an einen Abhitzekessel zum Betrieb einer Dampfturbinenanlage gekoppelt ist. Üblicherweise wird die Abgastemperatur der Gasturbine über einen großen Leistungsbereich möglichst konstant gehalten, wodurch jedoch schnellen Lastwechseln der Gasturbinenanlage Grenzen gesetzt sind. Begrenzt wird die Lastwechselfähigkeit im Wesentlichen von der Dynamik der Abgastemperaturregelung und damit der Änderbarkeit des Luftmassenstromes der Gasturbine. Der Dampfturbinenteil der Anlage folgt im Wesentlichen den Leistungsänderungen der Gasturbine mit einem erheblich trägerem Zeitverhalten. Bei kombinierten Gas- und Dampfturbinenanlagen im Netzbetrieb ist es demzufolge üblich, etwaigen vom Netz geforderten Leistungsänderungen, insbesondere zu Zwecken der Netzfrequenzstabilisierung, allein mit dem jeweiligen Gasturbinenteil der Anlage nachzukommen, zumal der Dampfturbinenteil in den ersten Sekunden nichts dazu beizutragen vermag. Somit ist es erforderlich, dass die gesamte Reserveleistung zur Primärregelung im Netzbetrieb durch die Gasturbine erbracht werden muss; ein Umstand der letztlich zur Folge hat, dass zur Bevorratung der Reserveleistung die seitens der Gasturbinenanlage stationär gefahrene Blockleistung um einen entsprechenden Leistungsanteil reduziert ist, um den verzögerten Beitrag der Dampfturbine in Sekunden kompensieren zu können, zumal Netzbetreiber verpflichtet sind, eine bestimmte zeitliche und bezüglich der angeforderten elektrischen Leistung stabile Wechselstromfrequenz, beispielsweise in Europa 50 Hz, zu garantieren. Die Frequenzstabilität wird im Netz durch einen dynamischen Last-/Leistungsausgleich sichergestellt, für den erforderlich ist, dass innerhalb von Sekunden beträchtliche Reserveleistungen zur Verfügung gestellt werden müssen.

Aus der EP 1 301 690 B1 ist ein diesbezügliches Verfahren zur Primärregelung einer kombinierten Gas- und Gasturbinenanlage zu entnehmen, bei dem die Dampfturbine zur schnellen Bereitstellung von Reserveleistung derart betrieben wird, dass wenigstens eine Druckstufe des Dampfteils mit angedrosselter Ventilstellung gefahren wird, wodurch eine Frequenzstützungs-Leistungsreserve aufgebaut wird, die bei netzseitiger Unterfrequenz zur Frequenzstützung genutzt wird, indem die Androsselung des Stellventils nach Maßgabe der Frequenzunterschreitung reduziert wird. Die zeitliche Dauer der reduzierten Androsselung ist hierbei unter Maßgabe eines zeitlich begrenzten Verschwindsignals bemessen.

Durch die Androsselung der Stellventile baut sich ein Staudruck vor der jeweiligen Druckstufe im Dampfturbinenteil auf, der in Form gespeicherter Reserveleistung nach Bedarf durch das Öffnen der Stellventile freigegeben werden kann, wobei der Betrag der Reserveleistung vom Grad der Androsselung abhängt. Wird die Androsselung aufgehoben, baut sich langsam der Staudruck ab, wodurch die gespeicherte Reserveleistung in Form sogenannter Primärregelleistung durch die Dampfturbine zusätzlich abgegeben werden kann. Ein derartiger Betrieb der Dampfturbine ermöglicht zum einen eine höhere stationäre Blockleistung, die insbesondere seitens der Gasturbinenanlage erbracht werden kann, zum anderen vermag die Dampfturbine praktisch ohne zeitliche Verzögerung, d.h. innerhalb weniger Sekunden deren Reserveleistungsanteil bereitzustellen, was letztlich zu einer gesamthaften verzögerungsfreien und größeren Primärregelleistung der kombinierten Gas- und Dampfturbinenanlage führt.

### Darstellung der Erfindung

Der Erfindung liegt die Aufgabe zugrunde, ein Verfahren zur Primärregelung einer kombinierten Gas- und Dampfturbinenanlage im Netzbetrieb, die längs einer gemeinsamen oder jeweils getrennter Wellen angeordnet ist, bei dem zur Bevorratung einer Reserveleistung ein Stellventil längs einer Arbeitsdampfzuführleitung zu wenigstens einer Druckstufe der Dampfturbine gedrosselt betrieben wird und das im Falle einer abnehmenden Netzfrequenz und einer hierdurch erforderlichen Netzfrequenzstützung in einen zumindest minder gedrosselten Zustand überführt wird, derart weiterzubilden, dass das Regelkonzept für die Stellventilpositionierung einerseits vereinfacht und andererseits an das individuelle Betriebsverhalten der Gasturbinenanlage angepasst werden soll unter Vermeidung der Anwendung der bisherigen Praxis bezüglich der Nutzung eines Verschwindsignals.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung unter Bezugnahme auf die nachstehenden Ausführungsbeispiele zu entnehmen.

Lösungsgemäß zeichnet sich ein Verfahren zur Primärregelung einer kombinierten Gas- und Dampfturbinenanlage im Netzbetrieb gemäß den Merkmalen des Oberbegriffes des Anspruches 1 durch folgende Verfahrensschritte aus:

Zunächst gilt es, das Auftreten einer Netzstörung in Form einer fehlerhaften Abweichung der Netzfrequenz von der Netzsollfrequenz zu erkennen, indem die Drehzahl der mit der Gasturbine verbundenen Welle überwacht wird und etwaige Frequenzabweichungen der Ist-Frequenz von einem Frequenzsollwert erfasst werden. Auf der Grundlage der erfassten Frequenzabweichung wird eine sogenannte Primärregel-Soll-Leistung ermittelt, die seitens der Gasturbinenanlage zu erbringen ist, um eine gewünschte stabilisierte Netzfrequenz zu erhalten. Im weiteren gilt es eine Leistungsabweichung zwischen der Primärregel-Soll-Leistung und einer von der Gasturbine tatsächlich abgegebenen Leistung, der so genannten Gasturbinen-Ist-Leistung zu ermitteln, wobei vorzugsweise beide Leistungswerte voneinander in Abzug gebracht werden, um letztlich eine Information darüber zu erhalten, ob und wieviel Leistung die Gasturbine zu wenig oder zu viel, gemessen an der Primärregel-Soll-Leistung, zu erbringen hat.

Auf der Basis dieser Leistungsabweichung wird letztlich jener Leistungsbeitrag ermittelt, der vom Dampfturbinenteil im vorstehend beschriebenen Störfall zu Zwecken einer Netzfrequenzstützung kurzfristig bereitzustellen ist, insbesondere in jenem Fall, in dem die Gasturbinen-Ist-Leistung geringer als die geforderte Primärregel-Soll-Leistung ist. In diesem Fall gilt es, die seitens der Dampfturbine im Wege des angedrosselten Betriebszustandes vorgehaltene Reserveleistung kurzfristig freizugeben. Hierbei dient die ermittelte Leistungsabweichung als Stellgröße für das Stellventil, so dass die von der Dampfturbine abgegebene Leistung der geforderten Primärregel-Dampfturbinen-Soll-Leistung entspricht.

Das lösungsgemäße Verfahren zeichnet sich somit dadurch aus, dass der zusätzlich vom Dampfturbinenteil abgeforderte Leistungsbeitrag durch eine geregelte Reduzierung der Androsselung des Stellventils wenigstens einer Druckstufe ausschließlich vom Betriebsverhalten des Gasturbinenteils abhängt und zwar derart, dass der Unterschied zwischen der Primärregel-Soll-Leistung und der tatsächlich von der Gasturbine erbrachten Ist-Leistung exakt jenem Energiebeitrag entspricht, der seitens der Dampfturbine zusätzlich zur Verfügung gestellt werden muss. Dies gilt sowohl im vorstehend geschilderten Fall einer Netzfrequenzstützung bei spontan auftretender Unterfrequenz, indem von der Dampfturbine Reserveleistung abgefordert wird, als auch im Falle auftretender Überfrequenz im Netzbetrieb, bei dem die tatsächlich seitens der Gasturbine erbrachte Ist-Leistung über der ermittelten Primärregel-Soll-Leistung liegt. In diesem Fall wird der seitens der Dampfturbine erbrachte Leistungsbeitrag reduziert, um genau jenen Betrag, um den die Gasturbinen-Ist-Leistung über der Primärregel-Soll-Leistung liegt.

Das lösungsgemäße Verfahren ist somit vollkommen unabhängig von vordefinierten Regelgrößen, wie es bspw. das in der EP 1 301 690 B1 genutzte Verschwindsignal darstellt, und stützt sich im Wesentlichen auf das aktuelle Leistungsverhalten der Gasturbine unter sich ändernden Netzfrequenzbedingungen.

## Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1 graphisch dargestelltes Regelkonzept für eine kombinierte Gas-/Dampfturbinenanlage,

Fig. 2 Blockschaltbild für das Regelkonzept einer kombinierten Einwellen-Gas-/Dampfturbinenanlage und

Fig. 3 Blockschaltbild für das Regelkonzept einer kombinierten Mehrwellen-Gas-/Dampfturbinenanlage ohne Gasturbinenmodell für die Berechnung der Primärregel-Gasturbine-Ist-Leistung.

Fig. 4 Blockschaltbild für das Regelkonzept einer kombinierten Mehrwellen-Gas-/Dampfturbinenanlage mit Gasturbinenmodell für die Berechnung der Primärregel-Gasturbine-Ist-Leistung.

## Wege zur Ausführung der Erfindung, gewerbliche Verwendbarkeit

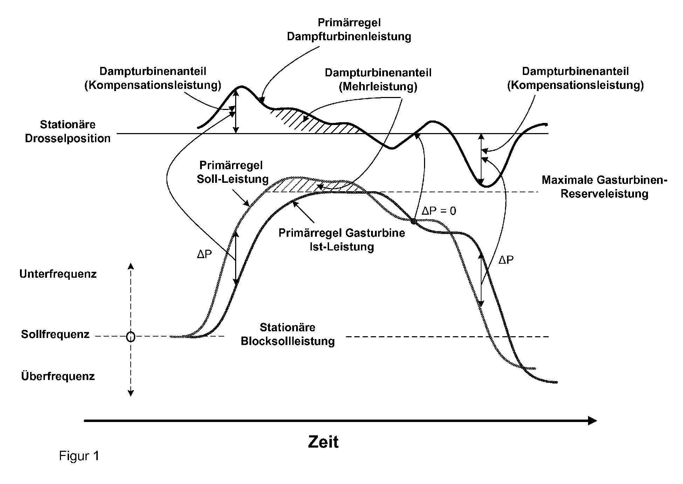

Das vorstehend beschriebene lösungsgemäße Regelkonzept zur Positionierung des Stellventils längs einer Arbeitsdampfzuführleitung zu wenigstens einer Druckstufe der Dampfturbine soll anhand von Figur 1 näher erläutert werden.

Über die Zeitachse t sind die Funktionsverläufe der Leistungsbeiträge sowohl vom Gasturbinenteil (siehe untere Funktionsverläufe) als auch der Leistungsbeitrag vom Dampfturbinenteil (siehe oberen Funktionsverlauf) dargestellt. Es sei angenommen, dass zu einem initialen Zeitpunkt die Netzfrequenz eine Störung erfährt, indem sie bspw. abfällt, d.h. es stellt sich im Netz eine Unterfrequenz ein. Ausgehend von einer so genannten stationären Blockleistung, die von der kombinierten Gas-/Dampfturbinenanlage abgefordert wird, um eine stabile Netzsollfrequenz zu erhalten, reagiert die Kombianlage auf eine Primärregel-Soll-Leistung mit einer schnell ansteigenden Primärregel-Gasturbinen-Ist-Leistung, die jedoch von der Gasturbine aufgrund der systemimmanenten Trägheit nicht simultan bereitgestellt werden kann. Es kommt somit zu einem Unterschied ΔP zwischen der ermittelten Primärregel- Soll-Leistung und der tatsächlich seitens der Gasturbinenanlage abgegebenen Primärregel-Gasturbinen-Ist-Leistung. Auf der Grundlage der festgestellten Leistungsabweichung ΔP zwischen der Soll-Leistung und der Ist-Leistung der Gasturbine wird ein Regelsignal generiert, das zum spontanen Öffnen des Stellventils im Dampfturbinenteil führt, wodurch die Dampfturbine durch spontanen Abbau der Reserveleistung im angedrosselten Betriebsfall exakt jenen Leistungsanteil zur Verfügung stellt, der seitens der Gasturbine aufgrund der Kurzfristigkeit nicht zur Verfügung gestellt werden kann. Anhand des Diagramms in Figur 1 kann entnommen werden, dass der jeweils zusätzlich, seitens der Dampfturbine abgegebene Leistungsbeitrag ΔP exakt dem Soll-/Ist-Unterschied des Gasturbinenleistungsbeitrages entspricht. Selbst im Falle eines Überschreitens der Primärregel- Soll-Leistung über die maximale Reserveleistung der Gasturbine vermag die Dampfturbine die zur Netzfrequenzstützung erforderliche Mehrleistung zur Verfügung zu stellen.

Stimmen die Primärregel- Soll-Leistung sowie die Primärregel-Gasturbinen-Ist-Leistung überein - dies ist an den jeweiligen Schnittpunkten beider Funktionsverläufe der Fall - so bedarf es seitens der Dampfturbine keines weiteren Leistungsbeitrages, so dass an jenen Stellen die Leistungskennlinie der Dampfturbine die in der oberen Darstellung eingetragene Abszisse schneidet, d.h. das Stellventil befindet sich in der stationären Drosselposition, in der sich der Druck des Arbeitsdampfes stromauf zum Stellventil erhöht bis sich ein Gleichgewicht zwischen dem Abhitzekessel-Speisewasserstrom und dem Dampfmassenstrom am Austritt des Abhitzekessels innerhalb der Dampfturbinenanlage einstellt.

Unterschreitet hingegen die Primärregel- Soll-Leistung die tatsächlich seitens der Gasturbine erbrachte Primärregel-Gasturbinen-Ist-Leistung, so erfährt das Stellventil eine erhöhte Androsselung, so dass seitens der Dampfturbine weniger Leistung abgegeben wird, und zwar in dem Maße, in dem die Leistungsabgabe der Gasturbine über der geforderten Primärregel- Soll-Leistung liegt. Dies ist im Bereich abfallender Funktionsverläufe der Gasturbinenleistung illustriert.

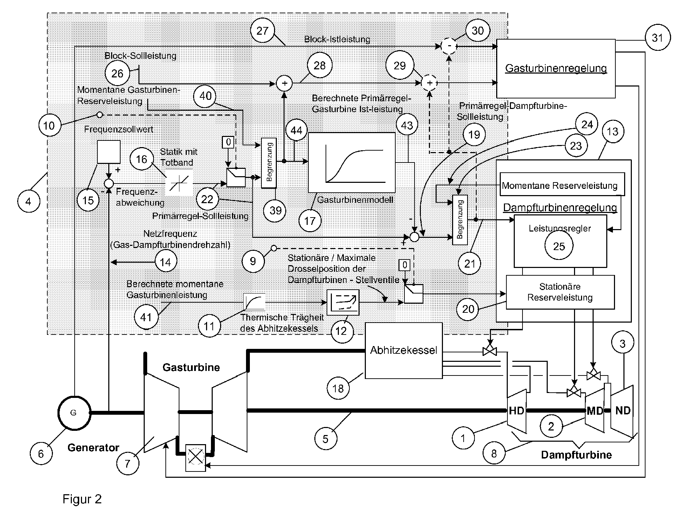

Zur technischen Realisierung des lösungsgemäßen Verfahrens gilt es, zwei Fälle zu unterscheiden, nämlich eine kombinierte Gas- und Dampfturbinenanlage, bei der sowohl der Gas- als auch Dampfturbinenteil eine gemeinsame Welle antreiben zur Gewinnung elektrischer Energie mittels eines einzigen Generators, sowie den Fall, dass Gas- und Dampfturbine jeweils zwei getrennte Wellen antreiben, die jeweils mit getrennten Generatoreinheiten verbunden sind. Das in Figur 2 illustrierte Blockschaltbild zeigt den vorstehend erstgenannten Fall, bei dem der mit dem Bezugszeichen 7 illustrierte Gasturbinenteil über eine gemeinsame Welle 5 mit dem Dampfturbinenteil 8, bestehend aus einer Hochdruckdampfturbine 1, einer Mitteldruckdampfturbine 2 sowie einer Niederdruckdampfturbine 3 verbunden ist, die zugleich zur Gewinnung elektrischer Energie mit einem Generator 6 verbunden ist. Die aus der Gasturbine 7 austretenden heißen Abgase werden in einen Abhitzekessel 18 für den Wärmetausch mit einem Arbeitsmedium gespeist, das im weiteren als Dampf zum Antrieb der Hochdruck-, Mitteldrucksowie Niederdruckdampfturbinen 1, 2, 3 dient.

Die in Figur 2 illustrierte kombinierte Gas-Dampfturbinenanlage wird im vorstehend beschriebenen Sinne derart betrieben, dass zumindest die längs der Arbeitsdampfzuführleitungen zur Hoch- und Mitteldruckturbine vorgesehenen Stellventile zur dampfturbinenseitigen Bevorratung einer Leistungsreserve angedrosselt gefahren werden. Zur Einflussnahme auf die Leistungsabgabe der kombinierten Gas-/Dampfturbinenanlage sind einerseits eine Gasturbinenregelung 31, die unmittelbaren Einfluss auf die Leistungsregelung im Rahmen der Brennstoff- sowie auch der Luftzuführung nimmt, andererseits eine Dampfturbinenregelung 13 vorgesehen, die die Ventilstellung der Stellventile längs der Arbeitsdampfzuführleitungen zu den jeweiligen Druckstufen regelt. Der in Figur 2 grau hinterlegte Bereich umfasst eine Regeleinrichtung 4 zur Primärregelung nach dem lösungsgemäßen Verfahren.

Um grundsätzlich bei einer auftretenden Netzfrequenzänderung überhaupt mit einem Dampfturbinenleistungsbeitrag reagieren zu können, bedarf es eines vorherigen Aufbaus einer dampfturbinenseitigen Reserveleistung. Mit Hilfe eines Ein-/Aus-Signals 9 lässt sich die Vorbereitung der Dampfturbine für eine Primärregelung aktivieren, wobei zur Ermittlung einer erforderlichen, zu bevorratenden stationären Reserveleistung 20 sowohl die seitens der Gasturbine 7 bereitgestellte Ist-Gasturbinenleistung 41, die in vorteilhafter Weise nicht unmittelbar messtechnisch durch direkten Leistungsabgriff, gegebenenfalls an der Welle 5, sondern vielmehr im Wege einer mathematischen Nachbildung berechnet wird, als auch die thermische Trägheit des Abhitzekessels 11 unter Berücksichtigung einer Funktion 12 herangezogen wird. Die Funktion 12 definiert die stationären und die maximal zulässigen Drosselpositionen der Dampfturbinen-Stellventile in Abhängigkeit von der momentanen Gasturbinen-Ist-Leistung 41 in Form einer mathematischen Gleichung oder einer Tabelle.

Die auf diese Weise ermittelte stationäre Drosselposition der Dampfturbinen-Stellventile wird innerhalb der Dampfturbinenregelung 13 jeweils in eine Position der Stellventile zur Androsselung des Druckes in den jeweiligen Druckstufen umgewandelt. Das Maß der Androsselung der Stellventile führt zu einer Druckerhöhung in den einzelnen Druckstufen, die genau dem erforderlichen Staudruck für die vorgegebene Reserveleistung 20 entspricht.

Über ein weiteres Ein-/Aus-Signal 10 lässt sich die lösungsgemäße Primärregelung für den Betrieb der kombinierten Gas- und Dampfturbine ein- bzw. ausschalten.

Längs der Welle 5 wird die aktuelle Dampf- oder Gasturbinendrehzahl 14 kontinuierlich erfasst und nach Umwandlung in eine Frequenz mit dem Frequenzsollwert 15 verglichen. Auftretende Frequenzabweichungen werden letztlich mit einer vordefinierten Statik 16 in eine Primärregel- Soll-Leistung 22 umgerechnet, wobei die Statik 16 ein Totband enthält, das als Diskriminator angesehen werden kann und schwerwiegende Störfälle von jenen kurzzeitig auftretenden Störschwankungen unterscheidet, die seitens der kombinierten Gas-und Dampfturbinenanlage im Normalbetrieb bewältigt werden können. Liegen beispielsweise die erfassten Frequenzabweichungen innerhalb des vorstehend genannten Totbandes, handelt es sich also um geringfügige Störungen, so ist die Primärregel- Soll-Leistung gleich Null.

Befindet sich die Regeleinrichtung im aktivierten Zustand durch Aktivierung des Schalters 10, so wird aus der ermittelten Primärregel- Soll-Leistung 22 unter Berücksichtigung der momentanen Gasturbinenreserveleistung 40 und unter Hinzuziehung der durch ein Gasturbinenmodell 17 gewonnenen Primärregel-Gasturbinen-Ist-Leistung 43 eine Primärregel-Dampfturbinen-Soll-Leistung 19 gewonnen. In der Hauptsache wird hierbei die Differenz zwischen der mathematisch nachgebildeten Primärregel-Gasturbinen-Ist-Leistung 44 und der Primärregel- Soll-Leistung 22 gebildet, die der Primärregel-Dampfturbinen-Soll-Leistung 19 entspricht.

Eine mögliche Nachbildung der Gasturbinenleistung ist mit folgendem mathematischen Zusammenhang erhältlich:

$$P_{\text{Berechnet-Primär-Gasturbine-Ist}} = KDF\left[\frac{1}{(1+s\cdot T/n)}\right]^n \qquad mit \qquad T = f\!\left(KDF\,\frac{T_1}{1+sT_2}\right)$$

mit

| | |
|---|---|
| T, $T_1$, $T_2$ | Zeitkonstanten, abhängig von der Gasturbinenträgheit und Regelkonzept, |
| S | Laplace-Operator |
| N | Ordnung des Modells. |
| KDF | Primärregel-Sollleistung 22 |
| f | Funktion |

Die Ordnung und die Zeitkonstanten sind von der Gasturbinenträgheit sowie dem Regelkonzept abhängig, wobei die Zeitkonstanten T zwischen 0 und 4 Sekunden liegen.

Die der Differenzbildung vorgeschalteten Begrenzung 39 dient lediglich einer Minimumauswahl zu Ermittlung der grösstmöglichsten Primärregel-Gasturbinen-Soll-Leistung 44 unter Berücksichtigung der seitens der Gasturbine bevorrateten Reserveleistung 40, die nötig ist, um eine Mehrleistung mittels der Dampfturbine trotz der Ausschöpfung der Gasturbinen-Reserveleistung bereitstellen zu können.

Die vorstehend gewonnene, im Wesentlichen aus der Differenz zwischen Primärregel- Soll-Leistung und Primärregel-Gasturbinen-Ist-Leistung ermittelte Primärregel-Dampfturbinen-Soll-Leistung 19 wird nach einer Begrenzung 23 unter Berücksichtigung der momentan von der Dampfturbinenanlage zur Verfügung stehenden Reserveleistung 24 an den Leistungsregler 25 der Dampfturbinenregelung 13 weitergeleitet, durch den letztlich die Stellventile längs der einzelnen Arbeitsdampfzuführleitungen zu der Hochdruck- und Mitteldruckstufe der Dampfturbine betätigt werden. Hierbei berechnet sich die momentane Reserveleistung der Dampfturbine 24 aus den aktuell gedrosselten Stellventilpositionen längs einer jeweiligen Arbeitsdampfzuführleitung und des damit verbundenen Dampfturbinen-Betriebzustands (Dampfdruck, -temperatur und -massenstrom). Die Summe aller momentan bevorrateten Reserveleistungen aller Stellventile 24 definieren die Limitierung der zulässig ausführbaren Leistungsänderungen der Dampfturbine, die letztlich eine Leistungsbegrenzung 23 für die Primärregel-Dampfturbinen-Soll-Leistung 19 darstellt.

Schließlich werden die Dampfturbinen-Stellventile unter Berücksichtigung ihrer zulässigen Möglichkeiten derart positioniert, dass sie in der Summe die geforderte Leistungsabfrage bzw. Leistungsänderung 21, die der Primärregel-Dampfturbinen-Soll-Leistung 19 entspricht, ergeben.

Werden zu Zwecken einer Netzfrequenzstützung die Stellventile in entsprechenden Arbeitsdampfzuführleitungen beispielsweise in ihrer Androsselung reduziert, so hat dies Auswirkungen sowohl auf die aktuelle Leistungsfähigkeit der Dampfturbine als auch auf eine Reduzierung der zur Verfügung stehenden Reserveleistung. Sämtliche Änderungsmöglichkeiten der Dampfturbinenanlage werden erfasst und stehen sämtlichen Regelungsmaßnahmen in situ zur Verfügung.

Des Weiteren wird die Information über die aktuelle Primärregel-Gasturbinen-Soll-Leistung 44 der Gasturbinenregelung 31 mitgeteilt, so dass die Gasturbine 7 gleichfalls in ihrem Leistungsanteil nachgeregelt werden kann. Bei der in Figur 2 dargestellten Einwellenanlage mit einem gemeinsamen Generator sowohl für die Dampf- als auch für die Gasturbinenanlage reagiert die Gasturbine wegen der schnellen Reaktion der Dampfturbine nicht oder nur sehr verlangsamt.

Die Gasturbinenregelung 31 reagiert vielmehr auf eine Leistungserhöhung am Generator auf der Grundlage der Primärregel-Gasturbinen-Soll-Leistung 44. Die Reaktion der Gasturbine verzögert sich entsprechend solange bis der Dampfturbinen-Leistungsbeitrag vollständig ausgeschöpft ist.

Um eine simultane Reaktion der Dampf- und Gasturbine zu erzielen, wird lösungsgemäß die begrenzte Primärregel-Dampfturbinen-Soll-Leistung 21 entweder zu der so genannten Gesamt-Block-Soll-Leistung 28, d.h. Block-Soll-Leistung 26 inklusive Primärregel-Gasturbine-Soll-Leitung 44, addiert (siehe 29) - hierbei ist unter Block-Soll-Leistung jene von der Gas- und Dampfturbinenanlage am Generator 6 zu erbringende Gesamtleistung zu verstehen, bei der die Netz-Soll-Frequenz erzeugt wird -, oder die Primärregel-Dampfturbinen-Soll-Leistung 19 wird von der Block-Ist-Leistung 27 subtrahiert (siehe 30) - hierbei ist unter Block-Ist-Leistung jene tatsächliche am Generator G abgreifbare Leistung zu verstehen, die gesamtheitlich von der Gasturbine und der Dampfturbine erbracht wird.

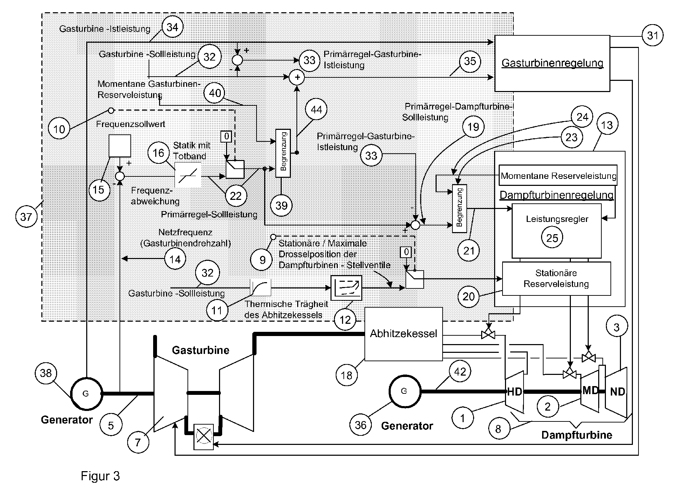

Das lösungsgemäße Regelungskonzept ist gleichsam auch an einer Mehrwellenanlage anwendbar, die in Figur 3 schematisiert dargestellt ist. So ist in diesem Falle die Gasturbine 7 mit einem Generator 38 über eine separate Welle 5 verbunden, wohingegen die Dampfturbine 8 über eine andere, separate Welle 42 den ihr zugeordneten Generator 36 antreibt.

Das lösungsgemäße Verfahren zur Primärregelung ist prinzipiell vergleichbar mit jenem zur Regelung einer Einwellenanlage gemäß Figur 2. Der einzige Unterschied zu dem Ausführungsbeispiel gemäß Figur 2 liegt darin, dass die Ist-Leistung der Gasturbine 34 am Generator 38 abgegriffen und ermittelt wird, und damit die Primärregel-Gasturbinen-Ist-Leistung 33 durch Subtraktion von Gasturbinen-Soll-Leistung 32 von Gasturbinen-Ist-Leistung 34 ermittelt werden kann Die Primärregel-Dampfturbine-Soll-Leistung 19 kann direkt (ohne Gasturbinenmodell 17) durch Subtraktion der Primärregel-Soll-Leistung 22 von Primärregel-Gasturbinen-Ist-Leistung 33 ermittelt werden. Die Reaktion der Dampfturbine 8 auf eine Frequenzabweichung auf den Dampfturbinengenerator erfolgt separat von dem Gasturbinenbeitrag. Damit kann die Gasturbinenregelung 31 auf die Primärregel-Gasturbinen-Soll-Leistung 44 ohne Kompensation des Dampfturbinenbeitrages 29 oder 30 (siehe Figur 2) reagieren.

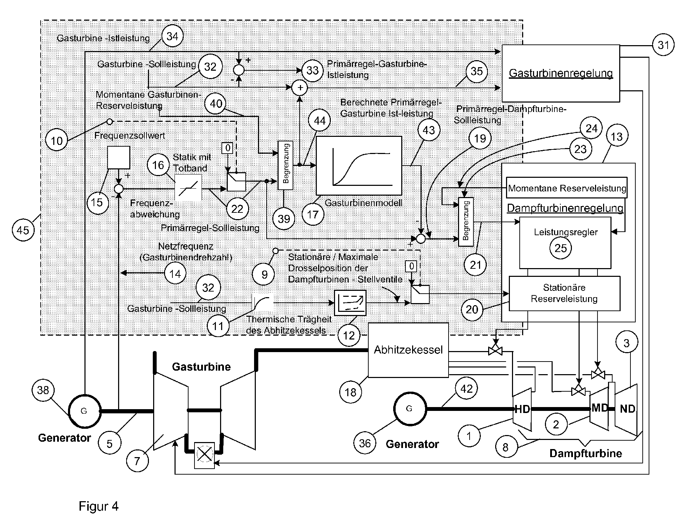

Figur 4 zeigt das lösungsgemässe Verfahren zur Primärregelung einer Mehrwellenanlage unter Berücksichtigung des Gasturbinenmodells 17 zur Berechnung der Primärregel-Gasturbinen-Ist-Leistung. Im Gegensatz zu der Primärregel-Gasturbinen-Ist-Leistung 33 (Fig. 3) verhindert das Gasturbinenmodell 17 die Übertragung des eventuell instabilen Primärregel-Verhaltens der Gasturbinen-Regelung 31 auf die Berechnung der Primärregel-Dampfturbinen-Soll-Leistung 19.

Zur schnellen Übersicht über die verwendeten Leistungsbegriffe soll die nachstehende Begriffstabelle dienen:

| | |
|---|---|
| Primärregel-Soll-Leistung 22 | Erforderliche Leistung, um eine stabile Netzfrequenz zu erzeugen. Ermittelt aus der Differenz zwischen Soll- und Ist-Frequenz |
| Primärregel-Gasturbinen-Soll-Leistung 44 | Leistung, die von der Gasturbine zu erbringen ist, um eine stabile Netzfrequenz zu erzeugen |
| Primärregel-Gasturbinen-Ist-Leistung 33 | Von der Gasturbine erbrachte Leistung für die Stabilisierung der Netzfrequenz. Ermittelt aus der Differenz zwischen stationärer Gasturbinen-Soll-Leistung und am Gasturbinen-Generator gemessener Leistung |
| Berechnete Primärregel-Gasturbinen-Ist-Leistung 43 | Leistung, die von der Gasturbine zu erbringen ist, um eine stabile Netzfrequenz zu erzeugen. Ermittelt durch ein mathematisches Modell der Gasturbine |
| Primärregel-Dampfturbinen-Soll-Leistung 19 | Leistung, die von der Dampfturbine zu erbringen ist, um eine stabile Netzfrequenz zu erzeugen |
| Gasturbinen-Reserveleistung 40 | Seitens der Gasturbine vorhandene Leistung, die zu Zwecken der Frequenzstützung freigesetzt werden kann |
| Dampfturbinen-Reserveleistung 20 | Seitens der Dampfturbine bevorratete Leistung, die zu Zwecken der Frequenzstützung kurzfristig freigesetzt werden kann |

(fortgesetzt)

| Gasturbine-Ist-Leistung 34 | Tatsächliche von der Gasturbine an einen separaten Generator abgegebene Leistung |
|---|---|
| Gasturbine-Soll-Leistung 32 | Von der Gasturbine an einen separaten Generator abzugebende Soll-Leistung zum Erhalt einer Grundlast |
| Block-Soll-Leistung 26 | An einen Generator abzugebende Gesamtleistung einer einwelligen Gas- und Dampfturbinenanlage, um eine Grundlast zu erhalten |
| Block-Ist-Leistung 27 | Tastsächliche an einen Generator abgegebene Leistung einer einwelligen Gas- und Dampfturbinenanlage |

**Bezugszeichenliste**

1   Hochdruckdampfturbinenstufe
2   Mitteldruckdampfturbinenstufe
3   Niederdruckdampfturbinenstufe
4   Regelmechanismus
5   Welle
6   Generator
7   Gasturbine
8   Dampfturbine
9   Ein-/Aus-Schalter
10  Ein-/Aus-Schalter
11  thermische Trägheit des Abhitzekessels
12  Korrekturfunktion
13  Dampfturbinenregelung
14  Gas-Dampfturbinendrehzahl
15  Frequenzsollwert
16  Statik mit Totband
17  mathematisches Gasturbinenmodell
18  Abhitzekessel
19  Primärregeldampfturbinen-Soll-Leistung
20  stationäre Reserveleistung der Dampfturbine
21  Begrenzte Primärregel-Dampfturbinen-Soll-Leistung, Leistungsänderung der Dampfturbine
22  Primärregel- Soll-Leistung
23  Begrenzung
24  momentane Reserveleistung der Dampfturbine
25  Leistungsregler der Dampfturbine
26  Block-Soll-Leistung
27  Block-Ist-Leistung
28  Block-Soll-Leistung inklusive Primärregel-Gasturbinen-Soll-Leistung
29  Addition
30  Subtraktion
31  Gasturbinenregelung
32  Gasturbinen-Soll-Leistung
33  Primärregel-Gasturbinen-Ist-Leistung
34  Gasturbinen-Ist-Leistung
35  Gasturbinen-Soll-Leistung inklusive Primärregel-Gasturbinen-Soll-Leistung
36  Generator
37  Regeleinrichtung für Mehrwellenanlagen
38  Generator
39  Begrenzung
40  Momentane Gasturbinen-Reserveleistung

41 Berechnete momentane Gasturbinenleistung
42 Welle
43 Berechnete Primärregel- Gasturbinen-Ist-Leistung
44 Primärregel-Gasturbinen-Soll-Leistung
45 Regeleinrichtung für Mehrwellenanlagen


**Patentansprüche**

1. Verfahren zur Primärregelung einer kombinierten Gas- und Dampfturbinenanlage (7, 8) im Netzbetrieb, die längs einer gemeinsamen Welle oder jeweils getrennter Wellen angeordnet ist, bei dem zur Bevorratung einer stationären Dampfturbinen-Reserveleistung (20) ein Dampfturbinen-Stellventil längs einer Arbeitsdampfzuführleitung zu wenigstens einer Druckstufe (1, 2) der Dampfturbine (8) gedrosselt betrieben wird, das im Falle einer abnehmenden Netzfrequenz und einer hierdurch erforderlichen Netzfrequenzstützung in einen zumindest minder gedrosselten Zustand überführt wird, **gekennzeichnet durch** folgende Verfahrensschritte:

   - Erfassen einer Frequenzabweichung einer von der Drehzahl der zumindest mit der Gasturbine (7) verbundenen Welle (5) abhängigen Ist-Frequenz (14) von einem Frequenzsollwert (15),
   - Ermitteln einer Primärregel-Soll-Leistung (22) auf Basis der erfassten Frequenzabweichung,
   - Ermitteln einer Leistungsabweichung zwischen der Primärregel- Soll-Leistung (22) und einer von der Gasturbine abgegebenen Leistung, der so genannten Primärregel-Gasturbinen-Ist-Leistung (33) oder einer berechneten Primärregel-Gasturbinen-Ist-leistung (43),
   - Ermitteln einer Primärregel-Dampfturbinensollleistung (19) ausschließlich auf Basis der ermittelten Leistungsabweichung und
   - Positionieren des einen Stellventils derart, dass die von der Dampfturbine abgegebene Leistung, die so genannte Dampfturbinen-Ist-Leistung, der Primärregel-Dampfturbinensollleistung (19) entspricht.

2. Verfahren nach Anspruch 1,
   **dadurch gekennzeichnet, dass** eine stationäre Drosselposition des wenigstens einen Dampfturbinen-Stellventils unter Zugrundelegung einer Gasturbinen-Soll-Leistung (32) oder der berechneten momentanen Gasturbinenleistung (41) berechnet wird und in eine stationäre Dampfturbinen-Reserveleistung (20) umgewandelt wird.

3. Verfahren nach Anspruch 1 oder 2,
   **dadurch gekennzeichnet, dass** die berechnete Primär-Gasturbinen-Ist-Leistung (43) $P_{Berechnet\text{-}Primär\text{-}Gasturbine\text{-}Ist}$ nach folgender Beziehung ermittelt wird:

$$P_{Berechnet\text{-}Primär\text{-}Gasturbine\text{-}Ist} = KDF\left[\frac{1}{(1 + s \cdot T/n)}\right]^n \qquad mit \qquad T = f\left(KDF\frac{T_1}{1 + sT_2}\right)$$

mit

T, $T_1$, $T_2$ Zeitkonstanten, abhängig von der Gasturbinenträgheit und Regelkonzept,
S Laplace-Operator
N Ordnung des Modells.
KDF Primärregel-Sollleistung (22)
f Funktion

4. Verfahren nach einem der Ansprüche 1 bis 3,
   **dadurch gekennzeichnet, dass** das Ermitteln der Leistungsabweichung durch Subtrahieren der Primärregel-Gasturbinen-Ist-Leistung (33) von der Primärregel--Soll-Leistung (22) oder durch Subtrahieren der berechneten Primärregel-Gasturbinen Ist-Leitung (43) von der Primärregel-Soll-Leistung (22) erfolgt, und dass die Leistungsabweichung direkt als Primärregel-Dampfturbinensollleistung (19) verwendet wird.

5. Verfahren nach einem der Ansprüche 1 bis 4,
   **dadurch gekennzeichnet, dass** die Primärregel-Dampfturbinensollleistung (19) nach einer Begrenzung 23 unter Berücksichtigung der momentan von der Dampfturbinenanlage zur Verfügung stehenden Reserveleistung 24 verwendet wird.

6.  Verfahren nach einem der Ansprüche 1 bis 5,
    **dadurch gekennzeichnet, dass** im Falle einer Einwellenanordnung, bei der die Gas- und die Dampfturbine mit einer gemeinsamen Welle (5) verbunden sind, die einen einzigen Generator (6) zur Energieerzeugung antreibt, eine Blocksollleistung inklusive Primärregel-Gasturbine-Soll-Leistung (28) vorgegeben wird, bei der eine Soll-Netzfrequenz für den Netzbetrieb erzeugt wird,
    dass zur Leistungsregelung der Gasturbine (7) eine Block-Ist-Leistung (27), die der aktuell über die Welle (5) an den Generator (6) abgegebenen Leistung entspricht, unter Zugrundelegung der Blocksollleistung (28) geregelt wird, und
    dass zu der Blocksollleistung (28) die Primärregel-Dampfturbinensollleistung (19) addiert oder die Primärregel-Dampfturbinensollleistung (19) von einer Block-Ist-Leistung (27) subtrahiert wird.

7.  Verfahren nach einem der Ansprüche 1 bis 6,
    **dadurch gekennzeichnet, dass** eine Primärregel-Gasturbinen-Soll-Leistung (44) auf Basis der verfügbaren Gasturbinen-Reserveleistung (40) ermittelt wird.

Figur 1

Figur 3

Figur 2

Figur 4

Europäisches
Patentamt

European
Patent Office

Office européen
des brevets

**EUROPÄISCHER RECHERCHENBERICHT**

**Nummer der Anmeldung**

EP 09 16 2736

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | DE 36 32 041 A1 (BBC BROWN BOVERI & CIE [DE]) 9. April 1987 (1987-04-09) * Spalte 7, Zeile 57 - Spalte 19, Zeile 56; Ansprüche; Abbildungen * * Zusammenfassung * ----- | 1-7 | INV. F01K13/02 F01K23/10 |
| X | WO 97/33074 A (SIEMENS AG [DE]; ZAVISKA OLDRICH [DE]; ACKENHEIL REINHOLD [DE]) 12. September 1997 (1997-09-12) * Seite 6, Zeile 10 - Seite 10, letzte Zeile; Ansprüche; Abbildungen * * Zusammenfassung * ----- | 1-7 | |
| X | WO 2006/097495 A (SIEMENS AG [DE]; ACKENHEIL REINHOLD [DE]; ZAVISKA OLDRICH [DE]) 21. September 2006 (2006-09-21) * Seite 12, Absatz 1 - Seite 21, Zeile 13; Ansprüche; Abbildungen * * Zusammenfassung * ----- | 1-7 | |
| X | EP 1 174 591 A (SIEMENS AG [DE]) 23. Januar 2002 (2002-01-23) * das ganze Dokument * ----- | 1-7 | RECHERCHIERTE SACHGEBIETE (IPC) F01K |
| A | EP 1 437 484 A (VATTENFALL EUROP GENERATION AG [DE]) 14. Juli 2004 (2004-07-14) * das ganze Dokument * ----- | 1-7 | |
| A | EP 1 275 822 A (PECOM EN S A [AR]) 15. Januar 2003 (2003-01-15) * das ganze Dokument * ----- -/-- | 1-7 | |

Der vorliegende Recherchenbericht wurde für alle Patentansprüche erstellt

| Recherchenort | Abschlußdatum der Recherche | Prüfer |
|---|---|---|
| München | 28. März 2012 | Zerf, Georges |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

| | Europäisches Patentamt European Patent Office Office européen des brevets | **EUROPÄISCHER RECHERCHENBERICHT** | **Nummer der Anmeldung** EP 09 16 2736 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SINDELAR R: "GEWAEHRLEISTUNG DER SEKUNDENDYNAMIK EINES DAMPFKRAFTWERKSBLOCKES", VGB KRAFTWERKSTECHNIK, VGB KRAFTWERKSTECHNIK GMBH. ESSEN, DE, Bd. 71, Nr. 1, 1. Januar 1991 (1991-01-01) , Seiten 4-13, XP000178871, ISSN: 0372-5715 * das ganze Dokument * ----- | 1-7 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 28. März 2012 | Zerf, Georges |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 16 2736

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2012

| Im Recherchenbericht angeführtes Patentdokument | | Datum der Veröffentlichung | Mitglied(er) der Patentfamilie | | Datum der Veröffentlichung |
|---|---|---|---|---|---|
| DE 3632041 | A1 | 09-04-1987 | KEINE | | |
| WO 9733074 | A | 12-09-1997 | CN | 1212039 A | 24-03-1999 |
| | | | EP | 0885348 A1 | 23-12-1998 |
| | | | ES | 2206697 T3 | 16-05-2004 |
| | | | IN | 192326 A1 | 10-04-2004 |
| | | | JP | 3963479 B2 | 22-08-2007 |
| | | | JP | 2000506241 A | 23-05-2000 |
| | | | RU | 2169272 C2 | 20-06-2001 |
| | | | US | 6134891 A | 24-10-2000 |
| | | | WO | 9733074 A1 | 12-09-1997 |
| WO 2006097495 | A | 21-09-2006 | CN | 101142375 A | 12-03-2008 |
| | | | EP | 1861586 A2 | 05-12-2007 |
| | | | WO | 2006097495 A2 | 21-09-2006 |
| EP 1174591 | A | 23-01-2002 | AT | 305083 T | 15-10-2005 |
| | | | AU | 8758301 A | 05-02-2002 |
| | | | AU | 2001287583 B2 | 04-03-2004 |
| | | | CN | 1440487 A | 03-09-2003 |
| | | | DE | 50107507 D1 | 27-10-2005 |
| | | | EP | 1174591 A1 | 23-01-2002 |
| | | | EP | 1301690 A1 | 16-04-2003 |
| | | | ES | 2249475 T3 | 01-04-2006 |
| | | | PT | 1301690 E | 18-07-2007 |
| | | | US | 2003167774 A1 | 11-09-2003 |
| | | | WO | 0208576 A1 | 31-01-2002 |
| EP 1437484 | A | 14-07-2004 | AT | 339595 T | 15-10-2006 |
| | | | DE | 10260409 B3 | 24-06-2004 |
| | | | DK | 1437484 T3 | 15-01-2007 |
| | | | EP | 1437484 A1 | 14-07-2004 |
| EP 1275822 | A | 15-01-2003 | AR | 029828 A1 | 16-07-2003 |
| | | | EP | 1275822 A2 | 15-01-2003 |
| | | | US | 2003010037 A1 | 16-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1301690 B1